# EUROPÄISCHE PATENTANMELDUNG

(11) **EP 3 744 218 A1**
(43) Veröffentlichungstag der Anmeldung: **02.12.2020**
(21) Anmeldenummer: 20174352.3
(22) Anmeldetag: 13.05.2020
(51) Int. Cl.: A47J 31/44

(54) **VERFAHREN ZUM BETRIEB EINER VORRICHTUNG ZUM EMULGIEREN EINER MISCHUNG AUS LUFT, DAMPF UND MILCH**

(30) Priorität: 28.05.2019 DE 102019207850
(71) Anmelder: BSH Hausgeräte GmbH, 81739 München (DE)
(72) Erfinder: Henz, Manuel, 83410 Laufen (DE); Nerbl, Christian, 83512 Wasserburg am Inn (DE); Bortenlänger, Florian, 83093 Bad Endorf (DE)

(57) **Zusammenfassung**

Verfahren zum Betrieb einer Vorrichtung zum Emulgieren einer Mischung aus Luft, Dampf und Milch.

Die vorliegende Erfindung betrifft Verfahren zum Betrieb einer Vorrichtung zum Emulgieren einer Mischung aus Luft, Dampf und Milch, insbesondere einen Milchschäumer für einen Kaffeeautomaten.

Die vorliegende Erfindung beruht auf dem allgemeinen Gedanken, dass ein Unterdruck zum Ansaugen von Milch und/oder eines Luft-Milch-Gemisches durch einen Dampfstoßvorgang erzeugt wird.

## Beschreibung

Die vorliegende Erfindung betrifft ein Verfahren zum Betrieb einer Vorrichtung zum Emulgieren einer Mischung aus Luft, Dampf und Milch, insbesondere einen Milchschäumer für einen Kaffeeautomaten, gemäß dem Oberbegriff des Anspruchs 1. Die Erfindung betrifft außerdem eine Vorrichtung, die zur Ausführung des erfindungsgemäßen Verfahrens ausgebildet ist, sowie eine mit einer derartigen Vorrichtung ausgestattete Kaffeemaschine.

Üblicherweise werden/wird bei bekannten Milchschäumern die Milch und/oder das Luft-Milch-Gemisch mittels Unterdruck angesaugt, wobei der Unterdruck nach dem Prinzip einer Wasserstrahlpumpe erzeugt wird. Um dies zu realisieren, wird ein Wasserdampfstrahl erzeugt, der in einer Unterdruckkammer, nach Austritt aus einer Dampfdüse, ein gewisses freies Wegstück überwindet und in eine Art Trichter und/oder Trompetengeometrie mündet. Im Bereich der freien Wegstrecke zwischen der Dampfdüse und dem Trichter werden zum einen Umgebungsmoleküle mitgerissen und zum anderen kollabiert der Wasserdampf zumindest teilweise, wodurch in der Unterdruckkammer der zum Ansaugen der Milch erforderliche Unterdruck erzeugt wird. Der Dampf wird dabei üblicherweise über eine elektrische Heizeinrichtung, insbesondere einen Durchlauferhitzer, erzeugt, indem mit Hilfe einer Pumpeinrichtung, insbesondere einer Kolbenpumpe, Wasser eingepumpt wird. Der so erzeugte Dampf wird zur Dampfdüse in der Unterdruckkammer weitergeleitet. Der Dampf erzeugt beim Durchströmen der Dampfdüse einen Dampfstrahl. Sobald die Milch und/oder das Luft-Milch-Gemisch den Dampfstrahl erreicht, kollabiert dieser und der Milchschäumer erreicht seinen gewünschten Betriebszustand, in dem Milchschaum erzeugt wird.

Bei bekannten Milchschäumern reicht der zu Beginn der Dampferzeugung vorliegende Druck nicht aus, um einen Dampfstrahl auszubilden, der ein Ansaugen der Milch und/oder des Luft-Milch-Gemisches ermöglicht. Erst nach einer gewissen Zeit, meisten nach mehreren Sekunden, liegt ein ausreichender Druck aus und der Milchschäumer erreicht seinen gewünschten Betriebszustand, in dem Milchschaum erzeugt wird und der Prozess eingeschwungen ist. Somit erzeugen bekannte Milchschäumer bis zum Erreichen des gewünschten Betriebszustands im Wesentlichen Dampf bzw. Wasserdampf.

Die vorliegende Erfindung beschäftigt sich mit dem Problem, für eine gattungsgemäße Vorrichtung, ein verbessertes oder zumindest ein alternatives Verfahren zum Betrieb anzugeben und/oder eine alternative Ausführungsform anzugeben, welche die aus dem Stand der Technik bekannten Nachteile überwindet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass ein Unterdruck zum Ansaugen von Milch und/oder eines Luft-Milch-Gemisches durch einen Dampfstoßvorgang erzeugt wird. Das erfindungsgemäße Verfahren zum Betrieb einer Vorrichtung zum Emulgieren einer Mischung aus Luft, Dampf und Milch, insbesondere in einem Milchschäumer in einem Kaffeeautomaten, sieht vor, dass der Unterdruck durch einen Dampfstoßvorgang erzeugt wird, bei dem ein Dampfstoß und/oder Druckstoß und/oder Druckimpuls und/oder Impuls genutzt wird, um Milchschaum zu erzeugen. Der Dampfstoß und/oder Druckstoß und/oder Druckimpuls und/oder Impuls kann sich dadurch auszeichnen, dass er den erforderlichen Druck bereitstellt, um einen Dampfstrahl in der Unterdruckkammer auszubilden, der ein Ansaugen der Milch und/oder des Luft-Milch-Gemisches ermöglicht. Im Gegensatz zu bekannten Milchschäumern durchströmt der Dampfstoß und/oder Druckstoß und/oder Druckimpuls und/oder Impuls die Dampfdüse erst, wenn der erforderliche Druck vorliegt, um einen Dampfstrahl in der Unterdruckkammer auszubilden, der ein Ansaugen der Milch und/oder des Luft-Milch-Gemisches ermöglicht. Durch eine Ventilanordnung stromauf einer Dampfdüse, welche zunächst in einer Sperrstellung ist, wird in der Vorrichtung ein Druck aufgebaut, der wenigstens größer ist als der Umgebungsdruck der Vorrichtung bzw. als der atmosphärische Druck. Es kann vorgesehen sein, dass der Druck in der Vorrichtung wenigstens 1 bar oder wenigstens 2 bar oder wenigstens 3 bar oder wenigstens 4 bar oder insbesondere 4,5 bar beträgt. Durch ein Öffnen und/oder Umschalten der Ventilanordnung stromauf der Dampfdüse entsteht durch einen Druckausgleichprozess ein Dampfstoß und/oder Druckstoß und/oder Druckimpuls und/oder Impuls und somit ein sofortiger und ausreichender Unterduck in der Unterdruckkammer, der ein Ansaugen der Milch und/oder des Luft-Milch-Gemisches gewährleistet.

Vorteilhaft hieran ist, dass reproduzierbare Startbedingungen für den Milchschaumherstellungsprozess bereitgestellt werden, sodass eine konstante und/oder reproduzierbare Qualität des auszugebenden Milchschaums erzielt wird. Schon beim Beginn des Milchschaumherstellungsprozesses wird eine ausreichende und/oder verbesserte Emulgierung des Milchschaumes erreicht. Ferner wird die Bezugszeit für den Milchschaum reduziert. Es wird zusätzlich eine verbesserte Qualität des auszugebenden Milchschaums erzielt, da der durch den Dampfstrahl eingebrachte Wassereintrag reduziert wird. Hierdurch kann der Wassergehalt im Milchschaum reduziert werden. Somit können/kann auch ein höherer Milchschaumanteil und/oder eine höhere Milchschaumtemperatur bereitgestellt werden. Ein weiterer Vorteil ist, dass kleinere Milchschaummengen mit der benötigten Temperatur herstellbar sind, um beispielsweise 20 ml Milchschaum für einen Espresso Macchiato bereitzustellen.

Bei einer vorteilhaften Weiterbildung der erfindungsgemäßen Lösung ist vorgesehen, dass beim Dampfstoßvorgang ein Dampfpolster bis zum Erreichen eines vordefinierten Druckwertes und/oder eines vordefinierten Temperaturwertes und/oder eines vordefinierten Zeitintervalls erzeugt wird, wobei nach dem Erreichen des vordefinierten Druckwertes und/oder des vordefinierten Temperaturwertes und/oder des vordefinierten Zeitintervalls das Dampfpolster zum Erzeugen des Unterdruckes eingesetzt wird. Unter einem Dampfpolster kann ein Wasserdampfpolster zu verstehen sein. Hierfür kann in einem Fluidpfad der Vorrichtung zwischen einer Heizeinrichtung der Vorrichtung und der Dampfdüse eine Ventilanordnung angeordnet sein, die während der Erzeugung des Dampfpolsters in einer Düsensperrstellung und/oder einer Sperrstellung ist, sodass kein Dampf zur Dampfdüse gelangt. Ein Fluidpfad kann ein Fluidleitungssystem ausbilden und/oder umfassen. Das Dampfpolster kann ein Luft-Wasser-Gemisch-Polster sein, welches durch Aufheizung des Wassers in der elektrischen Heizeinrichtung erzeugt wird. Nachdem Erreichen des vordefinierten Druckwertes und/oder des vordefinierten Temperaturwertes und/oder des vordefinierten Zeitintervalls, geht die Ventilanordnung in eine Dampfstellung über, in der das Dampfpolster zur Dampfdüse strömen kann. Der vordefinierte Druckwert und/oder der vordefinierte Temperaturwert und/oder das vordefinierte Zeitintervall kann durch Messungen ermittelt werden. Der vordefinierte Druckwert und/oder der vordefinierte Temperaturwert und/oder das vordefinierte Zeitintervall kann in einer Steuereinrichtung der Vorrichtung hinterlegt sein. Der Temperaturwert kann mit einem Temperatursensor gemessen werden. Der Druckwert kann mit einem Drucksensor gemessen werden oder aus dem Temperaturwert ermittelt werden. Es kann vorgesehen sein, dass der vordefinierte Druckwert wenigstens 1 bar oder wenigstens 2 bar oder wenigstens 3 bar oder wenigstens 4 bar oder insbesondere wenigstens 4,5 bar entspricht. Der vordefinierte Temperaturwert kann oberhalb von 100°C liegen. Der vordefinierte Temperaturwert kann im Temperaturbereich von 130°C bis 145°C liegen, insbesondere kann er im Temperaturbereich von 137°C bis 142°C liegen. Der vordefinierte Temperaturwert kann 137°C oder 142°C betragen.

Bei einer weiteren vorteilhaften Ausführungsform der erfindungsgemäßen Lösung ist vorgesehen, dass beim Dampfstoßvorgang zunächst ein Drainagevorgang erfolgt, bei dem Wasser in der Vorrichtung verdampft wird, wobei ein vorgegebener Wasserfüllstand und ein Dampfpolster in der Vorrichtung ausgebildet werden. Hierfür kann die Ventilanordnung der Vorrichtung eine Drainagestellung aufweisen, in der ein Dampfzuführkanal und der Drainagekanal fluidisch miteinander verbunden sind. Hierdurch kann überschüssiges Wasser aus der Vorrichtung entfernt werden. Ferner können Fluidleitungen der Vorrichtung zwischen Heizeinrichtung und Ventilanordnung vorerwärmt werden.

Bei einer vorteilhaften Weiterbildung der erfindungsgemäßen Lösung ist vorgesehen,dass beim Drainagevorgang überschüssiges Wasser über einen Drainagekanal der Vorrichtung abgeführt wird, um den vorgegebenen Wasserfüllstand auszubilden. Insbesondere kann ein vorgegebener Wasserfüllstand eingestellt werden, der einem vorgegeben Heizungsfüllstand der Vorrichtung entspricht.

Bei einer weiteren vorteilhaften Ausführungsform der erfindungsgemäßen Lösung ist vorgesehen, dass nach dem Drainagevorgang ein Wasserfüllstand ausgebildet ist, der im Wesentlichen 40 % bis 60 %, insbesondere wenigstens 50%, eines maximalen Heizungsfüllstandes der Vorrichtung entspricht. Der maximale Heizungsfüllstand der Vorrichtung kann dem maximalen Füllstand und/oder Füllmenge einer Heizeinrichtung der Vorrichtung entsprechen. Der maximale Heizungsfüllstand kann dem maximalen Fluidraumvolumen einer Heizeinrichtung der Vorrichtung entsprechen. Die Heizeinrichtung der Vorrichtung kann beispielsweise als Durchlauferhitzer ausgebildet sein. Ein solcher Durchlauferhitzer kann stehend in der Vorrichtung angeordnet sein. Bei einem stehenden Durchlauferhitzer können ein Fluideinlass und ein Fluidauslass ausgebildet sein, die entlang einer Längsachse und/oder einer Stehachse und/oder einer Vertikalachse zueinander beabstandet sind. Die Längsachse und/oder die Stehachse und/oder die Vertikalachse können parallel zueinander ausgereichtet sein. Hierbei kann der Fluidauslass entlang der Längsachse und/oder der Stehachse und/oder Vertikalachse höher angeordnet sein als der Fluideinlass. Bei einem Wasserfüllstand, der lediglich bis zum Fluidauslass reicht, liegt ein maximaler Heizungsfüllstand und/oder ein Heizungsfüllstand von 100% vor. Bei einem Wasserfüllstand, der lediglich bis zum Fluideinlass reicht, liegt ein Heizungsfüllstand von 0% vor. Bei einem Wasserfüllstand, der oberhalb Fluideinlasses und unterhalb des Fluidauslasses reicht, liegt ein Heizungsfüllstand im Bereich von größer 0% und kleiner als 100% vor.

Bei einer weiteren vorteilhaften Ausführungsform der erfindungsgemäßen Lösung ist vorgesehen, dass der Drainagevorgang beim Erreichen eines vordefinierten Zwischentemperaturwertes und/oder eines vordefinierten Zwischenzeitintervalls beendet wird, und anschließend ein Aufheizvorgang erfolgt, bei dem das Wasser und/oder das Dampfpolster in einem im Wesentlichen abgeschlossenen Raumvolumen der Vorrichtung aufgeheizt wird, um das Dampfpolster bis zum Erreichen des vordefinierten Druckwertes und/oder des vordefinierten Temperaturwertes und/oder des vordefinierten Zeitintervalls auszubilden. Hierfür kann in einem Fluidpfad der Vorrichtung zwischen einer Heizeinrichtung der Vorrichtung und der Dampfdüse eine Ventilanordnung angeordnet sein, die während des Aufheizvorganges in einer Düsensperrstellung und/oder Sperrstellung ist, sodass kein Dampf zur Dampfdüse gelangt. Die über eine Heizeinrichtung der Vorrichtung zugeführte Wärmeenergie führt zu einem Druckanstieg des Dampfpolsters.

Ein im Wesentlichen abgeschlossenes Raumvolumen der Vorrichtung kann ein Fluidpfad und/oder ein Fluidleitungssystem der Vorrichtung sein, wobei während des Aufheizvorgangs im Wesentlichen kein Fluid, insbesondere kein Wasser oder Wasserdampf, aus dem abgeschlossenen Raumvolumen ausströmen kann. Es kann jedoch vorgesehen sein, dass dem im Wesentlichen abgeschlossenen Raumvolumen zusätzlich ein Fluid, insbesondere Wasser, zugeführt werden kann.

Der Zwischentemperaturwert kann beispielsweise mit einem Temperatursensor gemessen werden oder aus einem hinterlegten Zeitwert ermittelt werden. Es kann vorgesehen sein, dass der vordefinierte Temperaturwert des Dampfpolsters größer ist als der Zwischentemperaturwert. Somit kann der Drainagevorgang aus Wasser zunächst ein Luft-Wasser-Gemisch und/oder Wasserdampf-Wasser-Gemisch erzeugen, dem ab dem Zwischentemperaturwert weiter Wärmenergie zugeführt wird, um ein Dampfpolster bis zum Erreichen des vordefinierten Druckwertes und/oder des vordefinierten Temperaturwertes und/oder des vordefinierten Zeitintervalls auszubilden.

Bei einer weiteren vorteilhaften Ausführungsform der erfindungsgemäßen Lösung ist vorgesehen, dass der Vorrichtung während des Aufheizvorgangs wenigstens zeitweise eine vorgegebene Wassermenge zugeführt wird, um eine Anpassung des Wasserfüllstandes und/oder Heizungsfüllstandes bereitzustellen. Es kann vorgesehen sein, dass der Wasserfüllstand und/oder Heizungsfüllstand im Wesentlichen konstant gehalten wird. Es kann vorgesehen sein, dass hierfür eine Pumpeinrichtung der Vorrichtung, insbesondere eine Kolbenpumpe und/oder eine Schwingkolbenpumpe, betrieben wird. Es kann vorgesehen sein, dass die Pumpeinrichtung getaktet und/oder gepulst betrieben wird. Die Pumpeinrichtung kann so ausgebildet sein, dass sie während des Aufheizvorganges der Vorrichtung und/oder einem Fluidpfad der Vorrichtung und/oder einer Heizeinrichtung der Vorrichtung eine Wassermenge und/oder einen Wassermassenstrom von 0,2 g/s bis 0,4 g/s, insbesondere 0,3 g/s, zuführt.

Bei einer weiteren vorteilhaften Ausführungsform der erfindungsgemäßen Lösung ist vorgesehen, dass in der Vorrichtung vor dem Drainagevorgang durch einen Befüllungsvorgang eine vordefinierte Wassermenge bereitgestellt wird. Insbesondere kann vorgesehen sein, dass in einer Heizeinrichtung der Vorrichtung eine definierte Minimalmenge an Wasser bereitgestellt wird, um den Drainagevorgang auszuführen. Während des Befüllungsvorgangs kann beispielsweise eine definierte Minimalmenge an Wasser in die Vorrichtung eingepumpt werden. Es kann vorgesehen sein, dass während des Befüllungsvorgangs beispielsweise Wasser in einen Fluidpfad stromab einer Pumpeinrichtung bis zu einer Ventilanordnung gepumpt wird. Hierbei kann es vorgesehen sein, das die Ventilanordnung der Vorrichtung schon während des Befüllungsvorganges in der Drainagestellung ist. Nach dem Befüllungsvorgang der Vorrichtung kann das Fluidraumvolumen eines Fluidpfades der Vorrichtung zwischen einer Pumpeinrichtung und einer Ventilanordnung im Wesentlichen vollständig mit Wasser gefüllt sein. Nach dem Befüllungsvorgang der Vorrichtung kann der Wasserfüllstand der Vorrichtung wenigstens 50%, insbesondere wenigstens 60% oder wenigstens 70% oder wenigstens 80% eines maximalen Heizungsfüllstandes der Vorrichtung entsprechen. Vorteilhaft hieran ist, dass für den Drainagevorgang eine Minimalmenge an Wasser zu Verfügung gestellt wird. Überschüssiges Wasser kann durch den Drainagevorgang abgeführt werden. Hierdurch kann der Dampfstoßvorgang, insbesondere der Drainagevorgang, im Wesentlichen unabhängig zu einem vorherigen Betriebszustand der Vorrichtung erfolgen. Der Dampfstoßvorgang kann beispielsweise nach einem vorherigen Brühvorgang und/oder nach einem vorherigen Spülvorgang und/oder nach einem vorherigen Dampfstoßvorgang und/oder nach einem vorherigen Systemstartprozess der Vorrichtung erfolgen. Hierdurch kann auf eine Erfassung des Betriebszustandes der Vorrichtung verzichtet werden. Somit wird eine einfache und kostengünstige Herstellung der Vorrichtung ermöglicht.

Bei einer weiteren vorteilhaften Ausführungsform der erfindungsgemäßen Lösung ist vorgesehen, dass beim Dampfstoßvorgang ein Dampfpolster stromauf einer Dampfdüse der Vorrichtung bis zum Erreichen eines vordefinierten Druckwertes und/oder eines vordefinierten Temperaturwertes und/oder eines vordefinierten Zeitintervalls erzeugt wird, wobei nach dem Erreichen des vordefinierten Druckwertes und/oder des vordefinierten Temperaturwertes und/oder des vordefinierten Zeitintervalls das Dampfpolster die Dampfdüse zum Erzeugen des Unterdruckes durchströmt. Hierfür kann in einem Fluidpfad zwischen der Heizeinrichtung und der Dampfdüse eine Ventilanordnung angeordnet sein, die während der Erzeugung des Dampfpolsters in einer Düsensperrstellung und/oder Sperrstellung ist, sodass kein Dampf zur Dampfdüse gelangt. Das Dampfpolster kann ein Luft-Wasser-Gemisch-Polster sein, welches durch Aufheizung des Wassers in der elektrischen Heizeinrichtung erzeugt wird. Nach dem und/oder mit dem Erreichen des vordefinierten Druckwertes und/oder des vordefinierten Temperaturwertes und/oder des vordefinierten Zeitintervalls, geht die Ventilanordnung in eine Dampfstellung über, in der das Dampfpolster zur Dampfdüse strömen kann. Der vordefinierte Druckwert und/oder der vordefinierte Temperaturwert und/oder das vordefinierte Zeitintervall kann durch Messungen ermittelt werden. Der vordefinierte Druckwert und/oder vordefinierte Temperaturwert und/oder das vordefinierte Zeitintervall kann in einer Steuereinrichtung der Vorrichtung hinterlegt sein. Der Temperaturwert kann auch dabei mit einem Temperatursensor gemessen werden. Der Druckwert kann auch hier mit einem Drucksensor gemessen werden oder aus dem Temperaturwert ermittelt werden. Es kann vorgesehen sein, dass der vordefinierte Druckwert wenigstens 1 bar oder wenigstens 2 bar oder wenigstens 3 bar oder wenigstens 4 bar oder insbesondere wenigstens 4,5 bar entspricht. Der vordefinierte Temperaturwert kann oberhalb von 100°C liegen. Der vordefinierte Temperaturwert kann im Temperaturbereich von 130°C bis 145°C liegen, insbesondere kann er im Temperaturbereich von 137°C bis 142°C liegen. Der vordefinierte Temperaturwert kann kann 137°C oder 142°C betragen.

Ferner betrifft die Erfindung eine Vorrichtung zum Emulgieren einer Mischung aus Luft, Dampf und Milch, insbesondere einen Milchschäumer für einen Kaffeeautomaten, wobei die Vorrichtung und/oder eine Steuervorrichtung der Vorrichtung zur Ausführung des erfindungsgemäßen Verfahrens ausgebildet und/oder programmiert sind/ist. Somit weist die Vorrichtung und/oder die Kaffeemaschine eine zur Ausführung des erfindungsgemäßen Verfahrens ausgebildete und/oder programmierte Steuervorrichtung auf.

Bei einer weiteren vorteilhaften Ausführungsform der erfindungsgemäßen Lösung ist vorgesehen, dass die Vorrichtung einen Dampfzuführkanal, einen Dampfdüsenkanal und einen Milchzuführkanal aufweist, wobei der Dampfdüsenkanal und der Milchzuführkanal jeweils in einer Unterdruckkammer münden, so dass Milch und/oder ein Luft-Milch-Gemisch mittels Unterdruck angesaugt werden kann. Der Dampfzuführkanal mündet in einer Ventilanordnung, wobei diese Ventilanordnung fluidisch mit dem Dampfdüsenkanal verbunden ist. Die Ventilanordnung weist eine Dampfstellung auf, in der der Dampfzuführkanal und der Dampfdüsenkanal fluidisch miteinander verbunden sind. Ferner weist die Ventilanordnung eine Düsensperrstellung auf, in der der Dampfzuführkanal und der Dampfdüsenkanal fluidisch voneinander getrennt sind. Die Ventilanordnung kann als Mehrwege-Ventil ausgebildet sein.

Während der Erzeugung eines Dampfpolsters, insbesondere während der Befüllungsvorganges und/oder des Drainagevorganges und/oder während des Systemstartvorgangs und/oder während des Aufheizvorganges, ist die Ventilanordnung in der Düsensperrstellung, erst nach dem Erreichen des vordefinierten Druckwertes und/oder Temperaturwertes und/oder Zeitintervalls des Dampfpolsters geht die Ventilanordnung in die Dampfstellung über.

Bei einer vorteilhaften Weiterbildung der erfindungsgemäßen Lösung ist vorgesehen, dass die Ventilanordnung fluidisch mit einem Drainagekanal verbunden ist. Die Ventilanordnung weist eine Drainagestellung auf, in der der Dampfzuführkanal und der Drainagekanal fluidisch miteinander verbunden sind. Während der Drainagestellung liegt die Düsensperrstellung vor, wobei während der Dampfstellung der Ventilanordnung der Dampfzuführkanal und der Drainagekanal fluidisch voneinander getrennt sind. Die Ventilanordnung weist eine Sperrstellung auf, in der der Dampfzuführkanal, der Dampfdüsenkanal und der Drainagekanal fluidisch voneinander getrennt sind. Während eines Drainagevorganges der Vorrichtung ist die Ventilanordnung in der Drainagestellung. Während eines Befüllungsvorganges der Vorrichtung kann die Ventilanordnung in der Drainagestellung sein. Während eines Systemstartvorgangs der Vorrichtung kann die Ventilanordnung in der Drainagestellung sein. Während des Aufheizvorganges ist die Ventilanordnung in der Sperrstellung. Beim Erreichen des vordefinierten Druckwertes und/oder des vordefinierten Temperaturwertes und/oder des vordefinierten Zeitintervalls des Dampfpolsters geht die Ventilanordnung in die Dampfstellung über.

Bei einer weiteren vorteilhaften Ausführungsform der erfindungsgemäßen Lösung ist vorgesehen, dass die Vorrichtung eine Pumpeinrichtung umfasst, die Wasser zu einer Heizeinrichtung der Vorrichtung pumpt. Die Heizeinrichtung kann eine elektrische Heizeinrichtung, insbesondere ein Durchlauferhitzer, sein. Die Pumpeinrichtung kann eine elektrische angetriebene Pumpeinrichtung, insbesondere eine Kolbenpumpe oder Schwingkolbenpumpe, sein.

Bei einer vorteilhaften Weiterbildung der erfindungsgemäßen Lösung ist vorgesehen, dass die Ventilanordnung während der Erzeugung eines Dampfpolsters bis zum Erreichen des vordefinierten Druckwertes in der Sperrstellung und/oder Düsensperrstellung ist, wobei nach dem Erreichen des vordefinierten Druckwertes und/oder Temperaturwertes und/oder Zeitintervalls die Ventilanordnung in der Dampfstellung ist.

Ferner betrifft die Erfindung eine Kaffeemaschine, insbesondere ein Kaffeevollautomaten, mit einer erfindungsgemäßen Vorrichtung. Die Kaffeemaschine kann einen Wasserbehälter und/oder einen Milchbehälter und/oder eine Steuereinrichtung und/oder einen Auslaufbereich aufweisen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine erfindungsgemäße Vorrichtung zum Emulgieren einer Mischung aus Luft, Dampf und Milch,
- Fig. 2: eine erfindungsgemäße Vorrichtung in einer Drainagestellung,
- Fig. 3: eine erfindungsgemäße Vorrichtung in einer Sperrstellung,
- Fig. 4: eine erfindungsgemäße Vorrichtung in einer Dampfstellung.

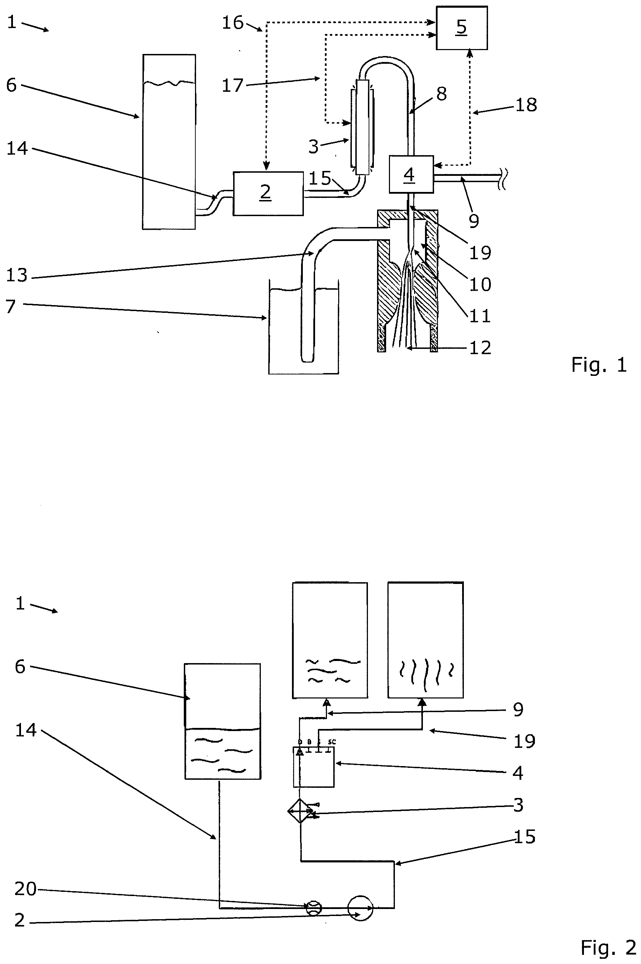

Die Figur 1 zeigt eine erfindungsgemäße Vorrichtung 1 zum Emulgieren einer Mischung aus Luft, Dampf und Milch, insbesondere ein Milchschäumer für einen Kaffeeautomaten, bei dem Milch und/oder ein Luft-Milch-Gemisch mittels Unterdruck angesaugt wird.

Eine Pumpeinrichtung 2 ist fluidisch über einen Wasserzuführkanal 14 mit einem Wasserbehälter 6, in dem Wasser gelagert ist, verbunden. Die Pumpeinrichtung 2 und eine Heizeinrichtung 3 sind über einen Zwischenkanal 15 fluidisch miteinander verbunden. Die Pumpeinrichtung 2 pumpt Wasser über den Zwischenkanal 15 zur Heizeinrichtung 3, die als Durchlauferhitzer ausgebildet ist. Die Heizeinrichtung 3 und eine Ventilanordnung 4 sind über einen Dampfzuführkanal 8 fluidisch miteinander verbunden. Die Ventilanordnung 4 ist fluidisch mit einem Dampfdüsenkanal 19 und einem Drainagekanal 9 verbunden.

Der Dampfdüsenkanal 19 mündet in einer Unterdruckkammer 10 eines Milchschäumers und weist stromab der Ventilanordnung 4 eine sich verjüngende Dampfdüse 11 auf. Ferner mündet in der Unterdruckkammer 10 ein Milchzuführkanal 13, der fluidisch mit einem Milchbehälter 7 verbunden ist.

Um Milchschaum im Auslaufbereich 12 bereitzustellen, wird ein Wasserdampfstrahl erzeugt, der in einer Unterdruckkammer 10, nach Austritt aus der Dampfdüse 11, ein gewisses freies Wegstück überwindet und in eine Art Trichter und/oder Trompetengeometrie mündet. Im Bereich der freien Wegstrecke zwischen der Dampfdüse 11 und dem Trichter werden zum einen Umgebungsmoleküle mitgerissen und zum anderen kollabiert der Wasserdampf zumindest teilweise. Hierdurch wird in der Unterdruckkammer 10 ein zum Ansaugen von Milch oder eines Luft-Milch-Gemisches erforderlicher Unterdruck erzeugt. Die über den Milchzuführkanal 13 angesaugte Milch oder das angesaugte Luft-Milch-Gemisch bildet am Auslaufbereich 12 den gewünschten Milchschaum aus.

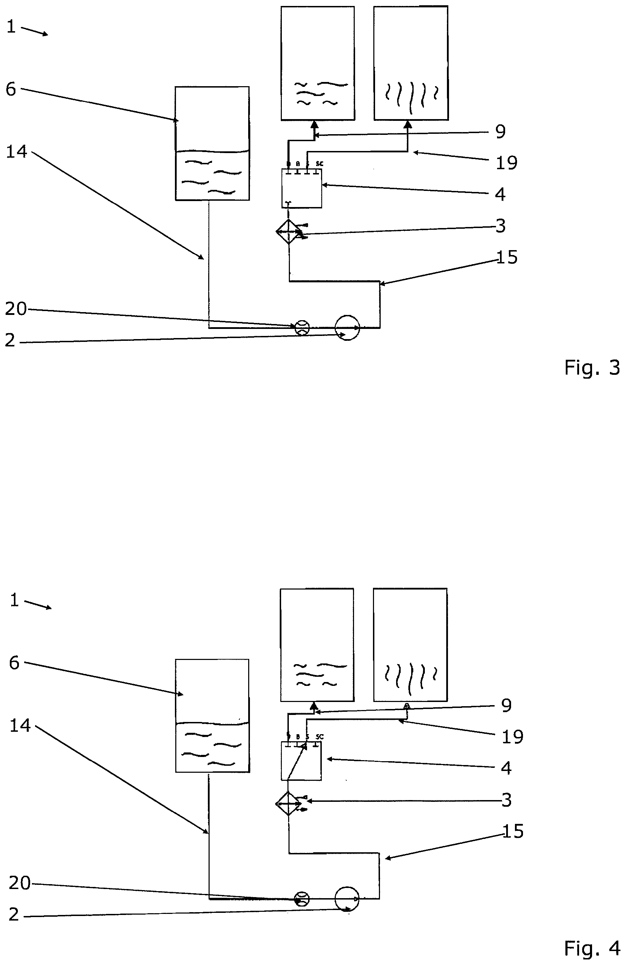

Während eines Drainagevorganges der Vorrichtung 1 ist die Ventilanordnung 4 in der Drainagestellung, die in der Fig. 2 schematisch dargestellt ist. Während eines Befüllungsvorganges der Vorrichtung 1 kann die Ventilanordnung 4 in der Drainagestellung sein. Während eines Systemstartvorgangs der Vorrichtung 1 kann die Ventilanordnung 4 in der Drainagestellung sein. Während des Aufheizvorganges ist die Ventilanordnung 4 in der Sperrstellung, die in der Fig. 3 schematisch dargestellt ist. Beim Erreichen des vordefinierten Druckwertes und/oder des vordefinierten Temperaturwertes und/oder des vordefinierten Zeitintervalls des Dampfpolsters geht die Ventilanordnung 4 in die Dampfstellung über, die in der Fig. 4 schematisch dargestellt ist. Wie in den Fig. 2 bis Fig. 4 angedeutet, kann stromauf der Pumpeinrichtung 2 ein Flussmengensensor bzw. Flowmeter 20 angeordnet sein.

Die Pumpeinrichtung 2 ist über eine erste Kommunikationsleitung 16 kommunizierend mit einer Steuereinrichtung 5 verbunden. Die Heizeinrichtung 3 ist über eine zweite Kommunikationsleitung 17 kommunizierend mit der Steuereinrichtung 5 verbunden. Die Ventilanordnung 4 ist über eine dritte Kommunikationsleitung 18 kommunizierend mit der Steuereinrichtung 5 verbunden.

Die Vorrichtung 1 ist dabei zur Durchführung eines erfindungsgemäßen Verfahrens ausgebildet, bei dem der Unterdruck zum Ansaugen von Milch und/oder eines Luft-Milch-Gemisches durch einen Dampfstoßvorgang erzeugt wird. Der Dampfstoß ermöglicht ein unmittelbares Ansaugen der Milch und/oder des Luft-Milch-Gemisches. Dabei durchströmt der Dampfstoß die Dampfdüse 11 erst, wenn der erforderliche Druck vorliegt, um eine Ansaugung der Milch und/oder des Luft-Milch-Gemisches zu realiseiren. Durch die Ventilanordnung 4 werden bis zum Erreichen des zur Erzeugung des Dampfstoßes erforderlichen Dampfpolsters der Dampfzuführkanal 8 und der Dampfdüsenkanal 19 fluidisch voneinander getrennt.

In der Fig. 2 kann ein Befüllungsvorgang und/oder eine Anpassung des Heizungsfüllstandes durch einen Drainagevorgang erfolgen. Beim Drainagevorgang kann der Fluidpfad und/oder Fluidleitungen bis zur Ventilanordnung 4 ausdampfen. Überschüssiges Wasser und/oder überschüssiger Dampf werden den Drainagekanal 9 abgeführt. Der Dampfzuführkanal 8 und der Drainagekanal 9 sind durch die Ventilanordnung 4 in der Drainagestellung fluidisch miteinander verbunden. Der Dampfzuführkanal 8 und der Dampfdüsenkanal 19 sind durch die Ventilanordnung 4 in der Drainagestellung fluidisch voneinander getrennt.

In der Fig. 3 sind der Dampfzuführkanal 8, der Dampfdüsenkanal 19 und der Drainagekanal 9 jeweils durch die Ventilanordnung 4 fluidisch voneinander getrennt. Es liegt eine Sperrstellung der Ventilanordnung 4 vor, sodass die Heizeinrichtung in einer Kesselstellung und/oder einem Kesselbetrieb betrieben werden kann.

In der Fig. 4 sind der Dampfzuführkanal 8 und der Dampfdüsenkanal 19 durch die Ventilanordnung 4 in der Drainagestellung fluidisch miteinander verbunden. Der Dampfzuführkanal 8 und der Drainagekanal 9 sind in der Fig. 4 durch die Ventilanordnung 4 fluidisch voneinander getrennt. Durch den Übergang der Ventilanordnung 4 aus der Sperrstellung der Fig. 3 in die Dampfstellung der Fig. 4 erzeugt das Dampfpolster, welches sich in der Sperrstellung der Fig. 3 zwischen Heizeinrichtung 3 und Ventilanordnung 4 ausbildet, durch einen Druckausgleichprozess einen Dampfstoß, der einen sofortigen und ausreichenden Unterduck in der Unterdruckkammer 10 ausbildet, der ein Ansaugen der Milch und/oder des Luft-Milch-Gemisches gewährleistet.

Vorteilhaft hieran ist, dass reproduzierbare Startbedingungen für den Milchschaumherstellungsprozess bereitgestellt werden, sodass eine konstante und/oder reproduzierbare Qualität des auszugebenden Milchschaums erzielt wird. Ferner wird die Bezugszeit für den Milchschaum reduziert. Ein weiterer Vorteil ist, dass kleinere Milchschaummengen mit der benötigten Temperatur herstellbar sind.

### Bezugszeichenliste

- 1: Vorrichtung
- 2: Pumpeinrichtung
- 3: Heizeinrichtung
- 4: Ventilanordnung
- 5: Steuereinrichtung
- 6: Wasserbehälter
- 7: Milchbehälter
- 8: Dampfzuführkanal
- 9: Drainagekanal
- 10: Unterdruckkammer
- 11: Dampfdüse
- 12: Auslaufbereich
- 13: Milchzuführkanal
- 14: Wasserzuführkanal
- 15: Zwischenkanal
- 16: Erste Kommunikationsleitung
- 17: Zweite Kommunikationsleitung
- 18: Dritte Kommunikationsleitung
- 19: Dampfdüsenkanal
- 20: Flussmengensensor

## Patentansprüche

1. Verfahren zum Betrieb einer Vorrichtung (1) zum Emulgieren einer Mischung aus Luft, Dampf und Milch, insbesondere ein Milchschäumer für einen Kaffeeautomaten, bei dem Milch und/oder ein Luft-Milch-Gemisch mittels Unterdruck angesaugt wird, **dadurch gekennzeichnet, dass** der Unterdruck durch einen Dampfstoßvorgang erzeugt wird.

2. Verfahren nach Anspruch 1, **dadurch gekennzeichnet, dass** beim Dampfstoßvorgang ein Dampfpolster bis zum Erreichen eines vordefinierten Druckwertes und/oder eines vordefinierten Temperaturwertes und/oder eines vordefinierten Zeitintervalls erzeugt wird, wobei nach dem Erreichen des vordefinierten Druckwertes und/oder des vordefinierten Temperaturwertes und/oder des vordefinierten Zeitintervalls das Dampfpolster zum Erzeugen des Unterdruckes eingesetzt wird.

3. Verfahren nach Anspruch 1 oder 2, **dadurch gekennzeichnet, dass** beim Dampfstoßvorgang zunächst ein Drainagevorgang erfolgt, bei dem Wasser in der Vorrichtung (1) verdampft wird, wobei ein vorgegebener Wasserfüllstand und ein Dampfpolster in der Vorrichtung (1) ausgebildet werden.

4. Verfahren nach Anspruch 3, **dadurch gekennzeichnet, dass** beim Drainagevorgang überschüssiges Wasser über einen Drainagekanal (9) der Vorrichtung (1) abgeführt wird, um den vorgegebenen Wasserfüllstand auszubilden.

5. Verfahren nach Anspruch 3 oder 4, **dadurch gekennzeichnet, dass** nach dem Drainagevorgang ein Wasserfüllstand ausgebildet ist, der im Wesentlichen 40 % bis 60 %, insbesondere wenigstens 50%, eines maximalen Heizungsfüllstandes der Vorrichtung (1) entspricht.

6. Verfahren nach einem der Ansprüche 2 bis 5, **dadurch gekennzeichnet, dass** der Drainagevorgang beim Erreichen eines vordefinierten Zwischentemperaturwertes und/oder eines vordefinierten Zwischenzeitintervalls beendet wird, und anschließend ein Aufheizvorgang erfolgt, bei dem das Wasser und/oder das Dampfpolster in einem im Wesentlichen abgeschlossenen Raumvolumen der Vorrichtung (1) aufgeheizt wird, um das Dampfpolster bis zum Erreichen des vordefinierten Druckwertes und/oder des vordefinierten Temperaturwertes und/oder des vordefinierten Zeitintervalls auszubilden.

7. Verfahren nach Anspruch 6, **dadurch gekennzeichnet, dass** der Vorrichtung (1) während des Aufheizvorgangs wenigstens zeitweise eine vorgegebene Wassermenge zugeführt wird, um eine Anpassung des Wasserfüllstandes und/oder Heizungsfüllstandes bereitzustellen.

8. Verfahren nach einem der Ansprüche 2 bis 7, **dadurch gekennzeichnet, dass** in der Vorrichtung (1) vor dem Drainagevorgang durch einen Befüllungsvorgang eine vordefinierte Wassermenge bereitgestellt wird.

9. Verfahren nach einem der Ansprüche 1 bis 8, **dadurch gekennzeichnet, dass** beim Dampfstoßvorgang ein Dampfpolster stromauf einer Dampfdüse (11) der Vorrichtung (1) bis zum Erreichen eines vordefinierten Druckwertes und/oder vordefinierten Temperaturwertes und/oder vordefinierten Zeitintervalls erzeugt wird, wobei nach dem Erreichen des vordefinierten Druckwertes und/oder des vordefinierten Temperaturwertes und/oder des vordefinierten Zeitintervalls das Dampfpolster die Dampfdüse (11) zum Erzeugen des Unterdruckes durchströmt.

10. Vorrichtung (1) zum Emulgieren einer Mischung aus Luft, Dampf und Milch, insbesondere ein Milchschäumer für einen Kaffeeautomaten, **dadurch gekennzeichnet, dass** die Vorrichtung (1) und/oder eine Steuervorrichtung (5) der Vorrichtung (1) zur Ausführung des Verfahren nach einem der Ansprüche 1 bis 9 ausgebildet und/oder programmiert ist.

11. Vorrichtung (1) nach Anspruch 10, **dadurch gekennzeichnet, dass** die Vorrichtung (1) einen Dampfzuführkanal (8), einen Dampfdüsenkanal (19) und einen Milchzuführkanal (13) aufweist, wobei der Dampfdüsenkanal (19) und der Milchzuführkanal (13) jeweils in einer Unterdruckkammer (10) münden, so dass Milch und/oder ein Luft-Milch-Gemisch mittels Unterdruck angesaugt werden kann, wobei der Dampfzuführkanal (8) in einer Ventilanordnung (4) mündet, wobei diese Ventilanordnung (4) fluidisch mit dem Dampfdüsenkanal (19) verbunden ist, wobei die Ventilanordnung (4) eine Dampfstellung aufweist, in der der Dampfzuführkanal (8) und der Dampfdüsenkanal (19) fluidisch miteinander verbunden sind, wobei die Ventilanordnung (4) eine Düsensperrstellung aufweist, in der der Dampfzuführkanal (8) und der Dampfdüsenkanal (19) fluidisch voneinander getrennt sind.

12. Vorrichtung (1) nach Anspruch 11, **dadurch gekennzeichnet, dass** die Ventilanordnung (4) fluidisch mit einem Drainagekanal (9) verbunden ist, wobei die Ventilanordnung (4) eine Drainagestellung aufweist, in der der Dampfzuführkanal (8) und der Drainagekanal (9) fluidisch miteinander verbunden sind, wobei während der Drainagestellung die Düsensperrstellung vorliegt, wobei während der Dampfstellung der Ventilanordnung (4) der Dampfzuführkanal (8) und der Drainagekanal (9) fluidisch voneinander getrennt sind, wobei die Ventilanordnung (4) eine Sperrstellung aufweist, in der der Dampfzuführkanal (8), der Dampfdüsenkanal (19) und der Drainagekanal (9) fluidisch voneinander getrennt sind.

13. Vorrichtung (1) nach einem der Ansprüche 10 bis 12, **dadurch gekennzeichnet**, die Vorrichtung (1) eine Pumpeinrichtung (2) umfasst, die Wasser zu einer Heizeinrichtung (3) der Vorrichtung (1) pumpt.

14. Vorrichtung (1) nach einem der Ansprüche 10 bis 13, **dadurch gekennzeichnet, dass** die Ventilanordnung (4) während der Erzeugung eines Dampfpolsters bis zum Erreichen des vordefinierten Druckwertes in der Sperrstellung und/oder Düsensperrstellung ist, wobei nach dem Erreichen des vordefinierten Druckwertes und/oder Temperaturwertes und/oder Zeitintervalls die Ventilanordnung (4) der in Dampfstellung ist.

15. Kaffeemaschine, insbesondere ein Kaffeevollautomat, mit einer Vorrichtung (1) nach einem der Ansprüche 10 bis 14.
